# EUROPÄISCHE PATENTSCHRIFT

(11) **EP 0 939 256 B1**
(45) Veröffentlichungstag und Bekanntmachung des Hinweises auf die Patenterteilung: **12.05.2004**
(21) Anmeldenummer: 99103404.2
(22) Anmeldetag: 22.02.1999
(51) Int. Cl.: F16J 15/08

(54) **Dichtungssystem**
Sealing system
Système d'étanchéité

(30) Priorität: 27.02.1998 DE 19808362
(43) Veröffentlichungstag der Anmeldung: 01.09.1999
(73) Patentinhaber: REINZ-DICHTUNGS-GMBH, 89233 Neu-Ulm (DE)
(72) Erfinder: Popielas, Frank, Dipl.-Ing., 89250 Senden (DE); Weiss, Alfred, Dipl.-Ing., 89231 Neu-Ulm (DE); Staiger, Joachim, Dipl.-Ing., 89134 Blaustein (DE); Göttel, Ralf, Dipl.-Ing., 89233 Neu-Ulm (DE); Hieble, Franz, Dipl.-Ing., 89250 Senden (DE); Schimmele, Oliver, Dipl.-Ing., 89284 Pfaffenhofen (DE)
(74) Vertreter: Tomerius, Isabel, Dr.

(56) Entgegenhaltungen:
- EP-A- 0 740 092
- EP-A- 0 769 616
- DE-A- 19 548 574

## Beschreibung

Die Erfindung betrifft ein Dichtungssystem mit einem Motorblock eines Verbrennungsmotors, einem Zylinderkopf und einer zwischen Motorblock und Zylinderkopf angeordneten metallischen Zylinderkopfdichtung, gemäß dem Oberbegriff des Anspruchs 1. Der Motorblock weist mehrere Zylinderbohrungen auf, die jeweils mit einer Laufbuchse versehen sind. Die Laufbuchsen weisen jeweils einen sogenannten Buchsenvorstand auf, sie stehen also in ihrer Höhe über die Oberfläche des Motorblocks über. Die Zylinderkopfdichtung ist mit den Zylinderbohrungen entsprechenden Zylinderöffnungen versehen und umfaßt mindestens zwei gesickte Deckbleche, die jeweils mindestens eine Sicke aufweisen, die die Zylinderöffnung radial außerhalb der Laufbuchse vollständig umschließt.

Bei solchen Dichtungen wird in neuerer Zeit häufig zur Abdichtung einer Durchgangsöffnung das sogenannte Zwei-Linien-Dichtkonzept angewendet. Die Abdichtung der Durchgangsöffnung erfolgt dabei mit zwei Dichtelementen, die die Durchgangsöffnung mit radialem Abstand voneinander umgeben.

Als erstes Dichtelement dient häufig eine Sicke, die mit einem Abstand zur Durchgangsöffnung verläuft und diese vollständig umgibt. Das zweite Dichtelement, das im allgemeinen als Stopper bezeichnet wird, befindet sich näher an der Durchgangsöffnung und verläuft in aller Regel an deren Rand. Der Stopper ist üblicherweise so aufgebaut, daß er - gegebenenfalls im Zusammenwirken mit weiteren Dichtungslagen - den Dichtspalt zwischen den abzudichtenden Flächen im Bereich um die Durchgangsöffnung ausfüllt. Der Stopper ist fest eingespannt, so daß in diesem Bereich eine hohe Pressung gegeben ist.

Neben der Dichtfunktion für die Durchgangsöffnung dient der Stopper außerdem dazu, ein vollständiges Abflachen der radial außerhalb des Stoppers verlaufenden Sicken während des Betriebs der Dichtung zu verhindern. Auf diese Weise kann die Elastizität der Sicken und damit ihre Funktionsfähigkeit über einen langen Zeitraum erhalten bleiben.

Zylinderkopfichtungen, die nach dem Zwei-Linien-Dicht-Prinzip arbeiten, sind beispielsweise aus der europäischen Offenlegungsschrift EP-A-230 804 bekannt. Dort ist eine Dichtung beschrieben, die zwei gesickte Deckbleche aufweist, deren Sickenwölbungen aufeinander zu weisen. Zwischen den gesickten Deckblechen sind zwei weitere Dichtungslagen vorhanden, wobei der Randbereich der einen um den Rand der anderen umgebördelt ist. Der umgebördelte Randbereich bildet einen Verformungsbegrenzer für eine der Sicken.

Eine ähnliche Zwei-Linien-Dichtung ist in der europäischen Offenlegungsschrift EP-A-627 581 beschrieben. Anstelle der Umbördelung wird der Stopper hier durch einen eingelegten Metallring gebildet. Der Metallring besitzt eine größere Dicke als die mittlere Dichtungslage, an der der Ring angeordnet ist. Dadurch ergibt sich zu beiden Seiten der mittleren Dichtungslage ein Überstand, der als Verformungsbegrenzer für die beiden Sicken in der oberen und unteren Decklage der Dichtung wirkt.

Ein gattungsgemäßes Dichtungssystem mit Laufbuchsen, die einen Buchsenvorstand aufweisen, ist aus der deutschen Patentschrift DE-C-195 39 245 bekannt. Die dort beschriebene metallische Zylinderkopfdichtung umfaßt im wesentlichen zwei gesickte Deckbleche, wobei der Buchsenvorstand der Laufbuchsen zur Abstützung der Sicken dient. Im Bereich zwischen Laufbuchse und Zylinderkopf weisen die Deckbleche dieser Zylinderkopfdichtung allerdings keine Strukturierung auf, d.h., sie liegen flach auf dem Bund der Laufbuchse auf. Dies führt, wie im folgenden erläutert wird, im Bereich zwischen Laufbuchse und Zylinderkopf zu nicht optimalen Dichteigenschaften. Flach aufeinandergelegte Stahlbleche sind bei den in diesem Zusammenhang relevanten Anpreßdrücken im wesentlichen weder plastisch noch elastisch verformbar, so daß durch gegebenenfalls vorhandene Rauhigkeiten oder durch thermische oder mechanische Belastung des Gesamtsystems entstehende Kanäle schlecht abgedichtet werden.

Hieraus ergibt sich die **Aufgabe** der vorliegenden Erfindung, ein Dichtungssystem für Laufbuchsenmotoren mit Buchsenüberstand anzugeben, bei dem der Bereich zwischen Laufbuchse und Zylinderkopf optimal abgedichtet und eine gute Anpassung an die abzudichtenden Gegenflächen erreicht wird.

Die Lösung dieser Aufgabe gelingt mit dem Dichtungssystem gemäß Anspruch 1. Vorteilhafte Ausführungsformen des erfindungsgemäßen Dichtungssystems sind in den Unteransprüchen beschrieben.

Die Zylinderkopfdichtung des erfindungsgemäßen Dichtungssystems umfaßt zwei gesickte Deckbleche und eine zwischen diesen Deckblechen angeordnete Distanzlage. Die Deckbleche weisen erfindungsgemäß jeweils mindestens eine die Zylinderöffnung radial außerhalb der Laufbuchse vollständig umschließende Sicke auf. Die Distanzlage weist ihrerseits im Bereich zwischen der kreisringförmigen Stirnfläche der Laufbuchse und Zylinderkopf einen Abstützbereich auf. Erfindungsgemäß ist dieser Abstützbereich topographisch ausgebildet und ist in axialer Richtung schwerer komprimierbar als die Sicken der Deckbleche. Die Zylinderkopfdichtung im erfindungsgemäßen Dichtungssystem ist dabei zudem so ausgebildet, daß die Summe der Dicken der Dichtungslagen im Bereich über der Zylinderlaufbuchse (also im Abstützbereich) plus der Höhe des Buchsenüberstandes größer ist als die Summe der Dicken der Dichtungslagen im radial außerhalb der Zylinderlaufbuchse angrenzenden Bereich der Dichtung.

Unter "topographisch ausgebildet" soll im Sinne der Erfindung verstanden werden, daß der Abstützbereich in der Distanzlage, wenn man ihn im Querschnitt in Radialrichtung von der Zylinderöffnung nach außen und senkrecht zu den Dichtungslagen betrachtet, nicht plan ist, sondern seine Dicke und/oder seinen Abstand von der Zylinderlaufbuchse ändert. Unter einem topographisch ausgebildeten Abstützbereich soll im Sinne der Erfindung also auch ein Abstützbereich verstanden werden, welcher mit einer Sicke versehen ist. Auch jegliche Art von Oberflächenstrukturierung soll unter einer topographischen Ausbildung mitumfaßt sein. Bevorzugte topographisch ausgebildete Abstützbereiche sind solche, die wenigstens eine die Zylinderöffnung vollständig umschließende Sicke und/oder wenigstens eine die Zylinderöffnung vollständig umschließende Oberflächenstrukturierung aufweist. Beispielhaft für Oberflächenstrukturierungen können Rillierungen genannt werden.

Im Falle einer Rillierung im Abstützbereich muß diese nicht kreisringförmig sein, sondern kann beispielsweise auch wellen- oder zickzackförmig verlaufen. Zudem können mehrere Rillierungen netzartig miteinander verbunden sein.

Durch die topographische Ausgestaltung des Abstützbereiches der Distanzlage wird eine optimale Anpassung an die sich einstellende Bauteiltopographie ermöglicht. Der Abstützbereich erhält in der Zylinderkopfdichtung des erfindungsgemäßen Dichtungssystems plastische und/oder elastische Eigenschaften, so daß auch bei starken thermischen und/oder mechanischen Belastungen des Gesamtsystems gute Dichteigenschaften erzielt werden.

Darüber hinaus wird durch eine Sicke im Abstützbereich eine zusätzliche Abdichtlinie geschaffen, wodurch das Abdichtpotential der Zylinderkopfdichtung weiter erhöht wird. Mit jeder weiteren Sicke im Abstützbereich kommt eine weitere Dichtlinie hinzu. Gleiches gilt im Hinblick auf die Rillierungen, die die plastische Verformbarkeit des Abstützbereiches verbessern. Werden Sicken und Rillierungen oder sonstige Oberflächenstrukturierungen gemeinsam verwendet, können die Rillierungen auf den Sickenoberflächen vorhanden sein, um deren plastische Verformbarkeit zu erhöhen.

Die Elastizität der Sicken der Deckbleche des erfindungsgemäßen Dichtungssystems und damit ihre Funktionsfähigkeit bleibt über einen langen Zeitraum erhalten, da keine der Sicken der Deckbleche während des Betriebs der Dichtung vollständig abgeflacht werden kann.

Bevorzugte Ausführungsformen der Zylinderkopfdichtung bestehen darin, die Distanzlage im Abstützbereich mit mehreren Sicken und/oder Rillierungen, insbesondere mit einer Doppelsicke und/oder einer Doppelrillierung zu versehen. Dadurch werden neben der optimalen Anpassung an die sich einstellende Bauteiltopographie zusätzliche Abdichtlinien geschaffen, die das Abdichtpotential weiter vergrößern. Außerdem wird durch eine Vielzahl von Elementen wie Sicken und/oder Rillierungen im Buchsenbereich eine gleichmäßigere Pressungsverteilung erreicht, was wiederum zu einer geringeren Buchsendeformation führt und Bauteilbeschädigungen, wie z.B. Fretting, verhindert. Bei entsprechender Auslegung können diese Elemente ein plastisch-elastisches Verhalten zeigen, wodurch die Bauteile gedämpft werden können. Es wird auf diese Weise eine bessere Dauerstandfestigkeit für die Zylinderkopfdichtung und die Komponenten in Zylinderkopf und Motorblock erreicht.

Die spezielle Ausbildung und insbesondere die Höhe des Abstützbereiches im erfindungsgemäßen Dichtungssystem hängt insbesondere davon ab, mit welcher Höhe die Zylinderlaufbuchse über den Motorblock vorsteht. Beispielsweise kann die zum Abstützen der Sicken der Deckbleche erforderliche zusätzliche Gesamtdicke im Bereich der Zylinderlaufbuchse verglichen mit der Gesamtdicke im Sickenaufstandsbereich praktisch ganz oder überwiegend vom Laufbuchsenüberstand bereitgestellt werden. Der Vorteil des topographisch ausgebildeten Abstützbereiches besteht dann darin, daß durch die topographische Anpassungsfähigkeit in diesem Bereich eine gleichmäßigere Pressungsverteilung am Brennraum erreicht werden kann, was zu einer deutlich verbesserten Dichtwirkung gegenüber herkömmlichen Dichtungssystemen führt.

Ist der Buchsenvorstand ausreichend hoch, sind also auch Dichtungssysteme denkbar, bei denen die Distanzlage im Abstützbereich eine geringere Dicke aufweist als im restlichen Bereich der Distanzlage. Ist die Höhe des Buchsenvorstandes für die Abstützung der Sicken allein nicht ausreichend, wird der Abstützbereich mit einer größeren Dicke ausgestattet als die restliche Distanzlage. Zweckmäßig weist dann die Distanzlage einen axialen Überstand in Richtung des Zylinderkopfes auf, der ein vollständiges Abflachen der Sicke des Deckblechs zwischen Zylinderkopf und Distanzlage im Einbauzustand verhindert. Entsprechend kann beispielsweise der Buchsenvorstand dazu verwendet werden, ein vollständiges Abflachen der Sicke des Deckblechs zwischen Motorblock und Distanzlage im Einbauzustand zu verhindern. Die Gesamtdicke aus Dichtungslagen plus Laufbuchsenüberstand im Bereich über der Zylinderlaufbuchse wird zweckmäßig so gewählt, daß sich am Brennraumrand die gewünschte optimale Flächenpressung einstellt.

Als Beispiel eines Abstützbereiches im erfindungsgemäßen Dichtungssystem, welcher zur Stopperfunktion für die Sicken der Deckbleche beiträgt, können solche Abstützbereiche genannt werden, welche Sicken aufweisen, die schwerer komprimierbar sind als die Sicken der Deckbleche. Besonders bevorzugt sind hier sogenannte gestauchte Sicken oder Nietsicken. Im Falle einer gestauchten Sicke weist die Distanzlage im Bereich dieser Sicke eine größere Dicke auf als im restlichen Bereich der Distanzlage. Vorzugsweise ist die Dicke im Sickenbereich, welcher an den Brennraumrand angrenzt, größer als im restlichen Sickenbereich, und die Dicke nimmt vorzugsweise vom Brennraumrand hin radial nach außen kontinuierlich ab. Ein solcher Dickenverlauf kann beispielsweise durch Anstauchen der Distanzlage von der Zylinderöffnung her erreicht werden.

Bei einer Nietsicke weist ein oberer, der Ebene der Distanzlage entfernter liegender Wölbungsbereich eine größere Breite auf als der untere, näher der Ebene der Distanzlage befindliche Wölbungsbereich. Zudem ist zweckmäßig die Dicke der Dichtungslage im Sickenfußbereich größer als diejenige im Bereich des Scheitelpunktes der Nietsicke. Besonders bevorzugt ist die Nietsicke im Abstützbereich so ausgebildet, daß sie in ihrem oberen Wölbungsbereich seitlich vorstehende Wülste aufweist.

Zur Optimierung der Dichteigenschaften der Zylinderkopfdichtung kann es von Vorteil sein, mindestens eine der Sicken des Abstützbereichs der Distanzlage so auszubilden, daß die Federkonstante dieser Sicke in Umlaufrichtung variiert. Dies ist sinnvoll, da der Anpreßdruck durch die Verschraubungen ebenfalls in Umlaufrichtung nicht konstant ist. Zweckmäßig erhöht sich die Federkonstante mit zunehmendem Abstand von den die Durchgangsöffnungen umgebenden Schrauböffnungen. Die Variation der Federkonstante der Sicken im Abstützbereich der Distanzlage kann auf an sich bekannte Weise durch Änderung der Sickenhöhe, -breite oder -steilheit erreicht werden. Außerdem können an den äußeren Sickenschenkeln oder unter der Sickenwölbung Stützelemente vorhanden sein, wobei z.B. eine Elastomerfüllung, die eine Sicke ganz oder teilweise ausfüllen kann, eine besonders einfache Form eines solchen Stützelements darstellt. Auch eine Hardcoating-Füllung ist gut geeignet. Die Stützelemente können weiterhin als metallische Einlagen ausgebildet sein, die in besonders einfacher Weise aus einem Metalldraht oder einer Metallspirale gefertigt sein können.

In einer weiteren bevorzugten Ausführungsform weist der Abstützbereich gegenüber der restlichen Distanzlage in beiden axialen Richtungen, insbesondere also auch in Richtung des Motorblocks, einen axialen Überstand auf. Dies kann insbesondere bevorzugt sein, wenn nur ein flacher Laufbuchsenvorstand vorhanden ist, der zu gering ist, um die Stopperfunktion für die Sicken der Deckbleche in ausreichendem Maß zu erfüllen.

In einer erfindungsgemäßen Variante ist die Distanzlage mit dem Abstützbereich einstückig gefertig. Für die Stopperfunktion des Abstützbereichs der Distanzlage ist die im Vergleich zu den Sicken der Deckbleche geringere axiale Kompressibilität dieses Bereichs der Distanzlage wichtig. Diese geringere Kompressibilität kann zweckmäßigerweise dadurch erreicht werden, daß die Distanzlage aus einem anderen, insbesondere einem härteren und/oder dickeren Material als die Deckbleche gefertigt ist. Eine weitere Möglichkeit, im Abstützbereich der Distanzlage eine geringere Kompressibilität zu erreichen, besteht darin, den gesamten Abstützbereich oder nur den Bereich der wenigstens einen Sicke mit einer Beschichtung ("Hardcoating") zu versehen, die die Federkonstante der Sicke erhöht. Auch eine sogenannte Gleitbeschichtung, welche die Reibung an benachbarten Flächen verringert, kann vorteilhaft sein.

Aus Gründen der leichteren Herstellbarkeit und höheren Variabilität der Dichtung kann es vorteilhaft sein, den Abstützbereich der Distanzlage als Ring auszubilden, der in die Distanzlage eingelegt werden kann. Falls erwünscht, wird der Ring auf geeignete Weise an der Distanzlage befestigt, zum Beispiel angeschweißt. Dieser Ring kann aus demselben Material wie die restliche Distanzlage bestehen. Vorzugsweise wird aber dieser Ring zur Bereitstellung der Stopperfunktion für die Sicken der Deckbleche aus einem anderen, insbesondere einem dickeren und/oder härteren Material gefertigt.

Um eine optimale Anpassung der Zylinderkopf an die Gegebenheiten von Motorblock, Laufbuchse und/oder Zylinderkopf zu erreichen, kann es vorteilhaft sein, die zwei Deckbleche jeweils aus unterschiedlichen Materialien zu fertigen. Dies können z.B. Stahlbleche unterschiedlicher Härte und/oder Dicke sein.

Eine besonders bevorzugte Ausführungsform der Zylinderkopfdichtung besteht aus zwei Deckblechen und der Distanzlage. Dichtungen mit zusätzlichen Lagen liegen jedoch ebenfalls im Rahmen der Erfindung.

Es kann vorteilhaft sein, abhängig jeweils von den geometrischen Gegebenheiten von Motorblock, Laufbuchse und/oder Zylinderkopf beide Deckbleche mit einer Halbsicke oder beide Deckbleche mit einer Vollsicke zu versehen. Es sind hier aber auch, je nach Anforderung, beliebige Kombinationen von Halb- und Vollsicken möglich.

Aus geometrischen Gründen wird häufig eine Ausführungsform der Halb- bzw. Vollsicken der Deckbleche bevorzugt, bei der die Wölbung der Halbsicken, von der Zylinderöffnung radial nach außen gesehen, in Richtung des Motorblocks verläuft bzw. bei der die Scheitel der Vollsicken in Richtung des Motorblocks weisen.

Die Formgebung der Sicken wird zweckmäßigerweise jeweils an die durch die geometrischen, mechanischen und thermischen Gegebenheiten definierte Gesamtsituation angepaßt. Insbesondere können die Sicken an ihrem Scheitel oder Fuß rund oder eckig sein. In den unterschiedlichen Dichtungslagen können sich die Sicken zudem in ihrer Formgebung, in ihrer Höhe sowie in ihrer Breite unterscheiden.

Bei Laufbuchsen mit vergleichsweise hohem Buchsenvorstand kann es schließlich von Vorteil sein, wenn die Distanzlage direkt auf der Laufbuchse aufliegt, d.h., daß die Zylinderöffnung in den Deckblechen zwischen Distanzlage und Motorblock größer sein müssen als der Außenradius der Laufbuchse.

Verschiedene bevorzugte Ausführungsformen der Erfindung werden im folgenden unter Bezugnahme auf die Zeichnung näher erläutert. Dabei zeigen:
- Fig. 1: eine Teildraufsicht auf eine Zylinderkopfdichtung, welche im erfindungsgemäßen Dichtungssystem verwendet werden kann;
- Fig. 2: einen Teilquerschnitt durch ein erfindungsgemäßes Dichtungssystem entlang der Linie A-A in Fig. 1;
- Fig. 3 bis 5: Teilquerschnitte durch weitere erfindungsgemäße Dichtungssysteme entlang der Linie A-A in Fig. 1 unter Weglassung des Zylinderkopfes;
- Fig. 6: Teilquerschnitt entlang der Linie A-A in Fig. 1 durch Zylinderkopfdichtungen zur Verwendung im erfindungsgemäßen Dichtungssystem; und
- Fig. 7 und 8: Teilquerschnitte entlang der Linie A-A in Fig. 1 durch ein Distanzblech einer Zylinderkopfdichtung eines erfindungsgemäßen Dichtungssystems.

In allen Figuren bezeichnen gleiche Bezugszeichen gleiche Teile.

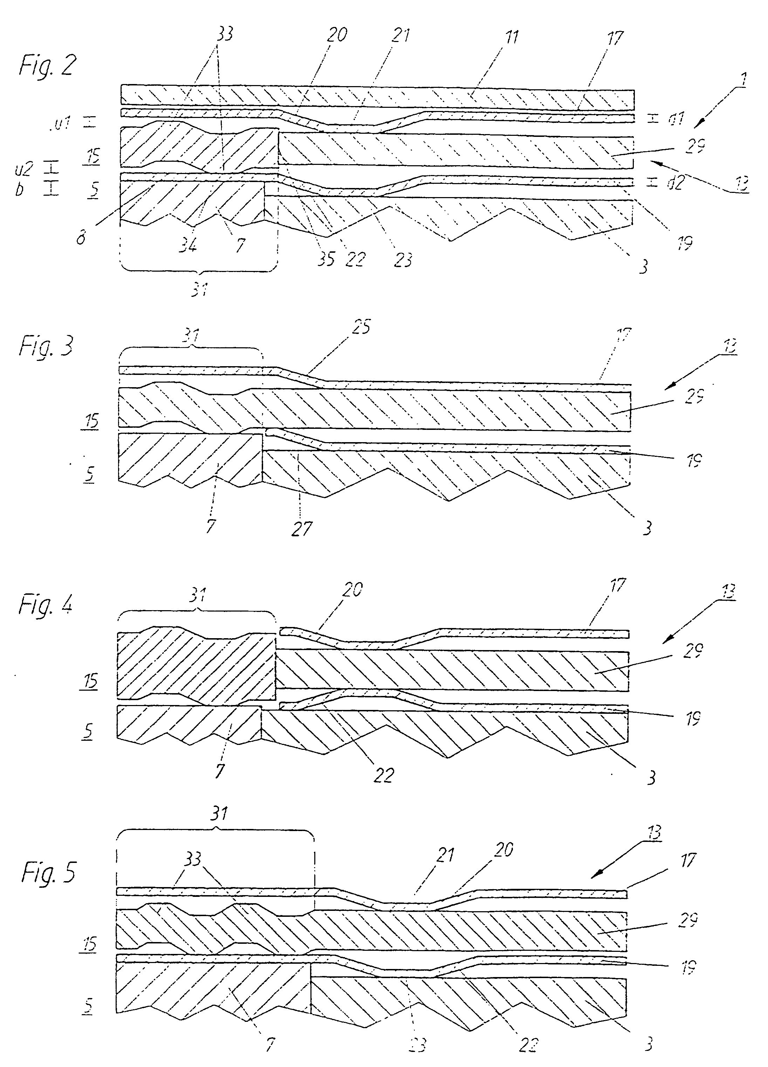

In Fig. 2 ist ein Dichtungssystem 1 entsprechend der vorliegenden Erfindung dargestellt. Das Dichtungssystem 1 beinhaltet zunächst einen Motorblock 3 mit einer Zylinderbohrung 5, die mit einer Laufbuchse 7 versehen ist. Gegenüber dem Motorblock 3 weist die Laufbuchse 7 einen Buchsenvorstand b auf, der in der in Fig. 2 gezeigten Ausführungsform eine relativ geringe Höhe hat.

Das Dichtungssystem besteht weiterhin aus dem Zylinderkopf 11 und der zwischen Zylinderkopf 11 und Motorblock 3 bzw. Laufbuchse 7 angeordneten Zylinderkopfdichtung 13. Entsprechend der Zylinderbohrung 5 ist die Zylinderkopfdichtung 13 mit einer Zylinderöffnung 15 versehen. Die Zylinderkopfdichtung 13 ist aus zwei Deckblechen 17 bzw. 19 mit den Dicken d1 bzw. d2 sowie der zwischen diesen Deckblechen angeordneten Distanzlage 29 aufgebaut. In der in Fig. 2 gezeigten Ausführungsform reichen beide Deckbleche 17 und 19 bis über die Laufbuchse 7. Die Dicken d1 und d2 der Deckbleche 17 und 19 tragen also zur Dicke des Stopperbereichs über der Laufbuchse 7 bei. Die Deckbleche 17 bzw. 19 weisen jeweils Vollsicken 20 bzw. 22 auf, deren Scheitel 21 bzw. 23 in Richtung des Motorblocks 3 weisen. Der Scheitel 21 der Vollsicke 20 im Deckblech 17 liegt auf der Distanzlage 29 auf. Der Scheitel 23 der Vollsicke 22 im Deckblech 19 liegt auf dem Motorblock 3 auf. Diese Anordnung sorgt für eine gute Dauerstandfestigkeit der Dichtung.

Im Bereich zwischen der kreisringförmigen Stirnfläche 8 der Laufbuchse 7 und Zylinderkopf 11 weist die Distanzlage 29 einen Abstützbereich 31 auf, der in der in Fig. 2 gezeigten Ausführungsform als Ring ausgebildet ist, der mit der restlichen Distanzlage 29 über eine Schweißnaht 35 verbunden ist. Der Ring ist aus einem dickeren Material als die restliche Distanzlage 29 gefertigt.

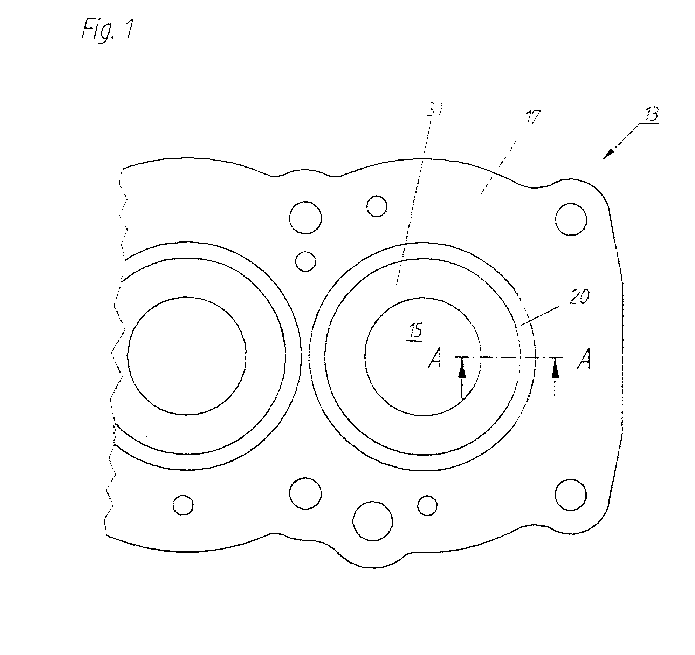

Fig. 1 veranschaulicht die erfindungsgemäße Dichtung in Teildraufsicht auf das Deckblech 17. Dabei soll das Bezugszeichen 31 lediglich die Lage des Abstützbereiches in der Distanzlage bezeichnen, welche unterhalb des Deckblechs angeordnet ist.

Erfindungsgemäß weist die Distanzlage 29 in diesem Ausführungsbeispiel im Abstützbereich 31, der durch den Ring gebildet wird, zwei Sicken 33 auf, so daß im Abstützbereich 31 in Richtung des Zylinderkopfs 11 ein Vorstand u1 bzw. in Richtung des Motorblocks ein Vorstand u2 gegenüber der restlichen Distanzlage 29 vorhanden ist. Da der Überstand u1 größer ist als die Dicke d1 des Deckblechs 17 zwischen Distanzlage 29 und Zylinderkopf 11 und da aufgrund der Materialeigenschaften des Rings die Sicken 33 schwerer komprimierbar sind als die Sicke 20 des Deckblechs 17, wird ein vollständiges Abflachen der Sicke 20 im Deckblech 17 im Einbauzustand verhindert. Zusätzlich zu den Stoppereigenschaften gewinnt die Distanzlage 29 durch die Sicken 33 elastische Eigenschaften. Es können darüber hinaus auf den Scheitelflächen 34 der Sicken 33 Rillierungen (der Übersichtlichkeit halber nicht dargestellt) eingearbeitet sein, durch die der Abstützbereich 31 zusätzlich verbesserte plastische Eigenschaften erhält, wodurch eine weitere Verbesserung der Dichteigenschaften erzielt wird. Der Buchsenvorstand b der Laufbuchse 7 schließlich ist größer als die Dicke d2 des Deckblechs 19, so daß ein vollständiges Abflachen der Sicke 22 im Einbauzustand ebenfalls wirksam verhindert wird.

Eine weitere Ausführungsform des erfindungsgemäßen Dichtungssystems 1 ist in Fig. 3 gezeigt. Der Zylinderkopf ist der Einfachheit halber weggelassen.

Die Zylinderkopfdichtung 13 ist - wie schon die Dichtung gemäß Fig. 2 - aus zwei Deckblechen 17 bzw. 19 sowie aus der zwischen diesen Deckblechen angeordneten Distanzlage 29 aufgebaut. Die Deckbleche 17 bzw. 19 weisen in der hier gezeigten Ausführungsform jeweils eine Halbsicke 25 bzw. 27 auf, deren Wölbung, von der Zylinderbohrung 5 radial nach außen gehend betrachtet, in Richtung des Motorblocks 3 verläuft.

Die Zylinderöffnung 15 im Deckblech 19 zwischen Motorblock 3 und Distanzlage 29 ist größer als der Außenradius der Laufbuchse 7, so daß in der hier gezeigten Ausführungsform die Distanzlage 29 direkt auf der Laufbuchse 7 aufliegt. Die Zylinderöffnungen 15 in Distanzlage 29 und dem zwischen Distanzlage 29 und Zylinderkopf 11 angeordneten Deckblech 17 entsprechen im wesentlichen dem Innenradius der Laufbuchse 7.

Die Laufbuchse 7 weist wieder gegenüber dem Motorblock 3 einen Buchsenvorstand b auf, der hier größer ist als bei der in Fig. 2 gezeigten Ausführungsform. Die Abstützung der Sicke 27 im Deckblech 19 übernimmt hier in erster Linie der Buchsenvorstand b, so daß der Vorstand u2 des Abstützbereichs minimal gehalten werden kann. Dadurch können Bauteilverzüge verringert werden.

Der Abstützbereich 31 der Distanzlage 29 entspricht im wesentlichen dem in Fig. 1 dargestellten, jedoch ist er einteilig im Distanzblech ausgebildet.

Fig. 4 zeigt ein weiteres Beispiel eines erfindungsgemäßen Dichtungssystems (ohne Zylinderkopf). In der Zylinderkopfdichtung 13 sind die beiden gesickten Deckbleche 17 und 19 bis an den Abstützbereich 31 der Distanzlage 29 herangeführt. Die Scheitelpunkte der Sicken 20 und 22 weisen in Richtung auf die Distanzlage 29. Der Buchsenvorstand b der Zylinderlaufbuchse 7 ist gering, so daß die Stützwirkung für die Sicken 20 und 22 praktisch ausschließlich vom Abstützbereich 31 übernommen wird. Der Abstützbereich ist in Form eines massiven, an die Distanzlage 29 angrenzenden eingelegten Ringes ausgebildet, in welchen eine Doppelsicke eingeprägt ist. Die Überbrückung des Dichtspalts zwischen Zylinderlaufbuchse und Zylinderkopf erfolgt in diesem Beispiel ausschließlich durch den Abstützbereich 31.

In dem in Fig. 5 gezeigten Beispiel tragen dagegen die gesickten Deckbleche 17 und 19 zur Überbrückung des Dichtspaltes oberhalb der Zylinderlaufbuchse 7 bei. Beide Sicken 20 und 22 weisen mit ihren Scheiteln 21 und 23 in Richtung auf den Motorblock 3. Der Abstützbereich 31, in welchem mehrere Sicken 33 ausgebildet sind, ist einstückig mit der Distanzlage 29 verbunden.

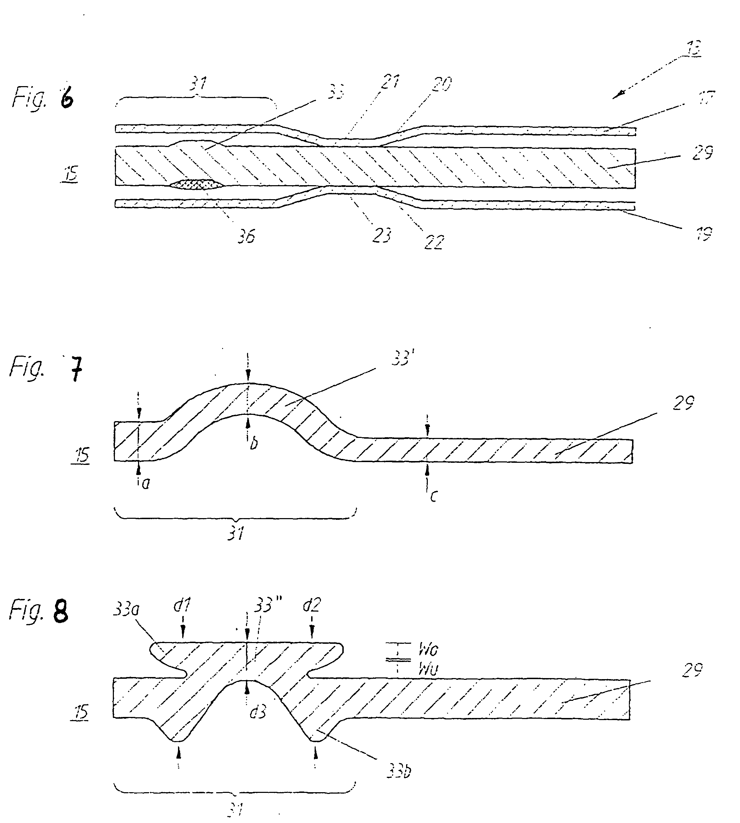

In der in Fig. 6 gezeigten Dichtung wird der Vorsprung der Distanzlage 29 im Abstützbereich 31 in Richtung auf das Deckblech 17 hin durch eine eingeprägte Sicke 33 erreicht. Ein Vorsprung in Richtung auf das untere Deckblech 19 wird dadurch erreicht, daß im Bereich unterhalb der Sicke 33 eine Hardcoating-Einlage 36 eingebracht ist.

Fig. 7 stellt eine Distanzlage 29 dar, wie sie in einer Dichtung eines erfindungsgemäßen Dichtungssystems verwendet werden kann. Grundsätzlich kann diese Distanzlage in allen im Vorangegangenen gezeigten Dichtungssystemen anstelle der dort verwendeten Distanzlagen eingesetzt werden, also unabhängig davon, ob im System ein hoher oder niedriger Buchsenvorstand vorhanden ist, eines oder beide der gesickten Deckbleche über die Laufbuchse gezogen wird oder ob die Sicken in den Deckblechen gleich- oder gegengerichtet sind. Die genaue Ausbildung der einzelnen Lagen richtet sich jeweils zweckmäßig insbesondere danach, wie groß der abzudichtende Spalt zwischen Laufbuchse und Zylinderkopf ist. Eine eventuell erforderliche Symmetrierung der Zylinderkopfdichtung im erfindungsgemäßen Dichtungssystem erfolgt bei Einbau und Betrieb der Dichtung von selbst.
In der in Fig. 7 dargestellten Distanzlage 29 wird der Abstützbereich 31 durch eine Sicke 33' gebildet, in deren Bereich die Distanzlage eine größere Dicke aufweist als im restlichen Bereich der Distanzlage. Insbesondere nimmt die Dicke von c über b nach a (also in Richtung auf die Zylinderöffnung 15 hin) kontinuierlich zu. Dieser Dickenverlauf kann durch Anstauchen der Distanzlage von der Zylinderöffnung 15 her erreicht werden.

Für die Verwendungsmöglichkeiten der Distanzlage 29, welche in Fig. 8 dargestellt ist, gilt grundsätzlich das gleiche, was hinsichtlich Fig. 7 dargelegt wurde. Der Abstützbereich 31 wird hier durch eine sogenannte Nietsicke 33'' gebildet. Diese Nietsicke weist in ihrem oberen Wölbungsbereich Wo eine größere Breite auf als in ihrem unteren, der Distanzlage 29 näher liegenden Wölbungsbereich Wu. Die größere Breite im oberen Wölbungsbereich wird durch seitlich vorstehende Wülste 33a erreicht. Zudem weist die Nietsicke 33'' im Bereich ihrer Sickenfüße beidseitig Vorsprünge 33b auf. Die Dickenverteilung ist d1 = d2 > d3. Durch die Dikkenkumulation der Wülste 33a und der Vorsprünge 33b im Bereich der Sickenfüße ist die Nietsicke 33'' als Abstützbereich des erfindungsgemäßen Dichtungssystems ausgezeichnet geeignet.

## Patentansprüche

1. Dichtungssystem (1) mit:
einem Motorblock (3) eines Verbrennungsmotors mit mehreren axialen Zylinderbohrungen (5), die jeweils mit einer einen axialen Buchsenvorstand (b) aufweisenden Laufbuchse (7) versehen sind, einem Zylinderkopf (11) und einer zwischen Motorblock (3) und Zylinderkopf (11) angeordneten metallischen Zylinderkopfdichtung (13), die den Zylinderbohrungen (5) entsprechende Zylinderöffnungen (15) aufweist und zwei gesickte Deckbleche (17, 19) umfasst, die jeweils mindestens eine die Zylinderöffnung (15) radial außerhalb der Laufbuchse (7) vollständig umschließende Sicke (20, 22; 25, 27) aufweisen, wobei die Zylinderkopfdichtung (13) zusätzlich eine zwischen den zwei Deckblechen (17, 19) angeordnete Distanzlage (29) umfasst, und wobei die Summen der Dicken der Dichtungslagen im Bereich über der Zylinderlaufbuchse plus der axiale Höhe des Buchsenüberstandes größer ist als die Summe der Dicken der Dichtungslagen im radial außerhalb der Zylinderlaufbuchse angrenzenden Bereich der Dichtung,
**dadurch gekennzeichnet,**
**dass** die Distanzlage (29) im Bereich zwischen der kreisringförmigen Stirnfläche (8) der Laufbuchse (7) und Zylinderkopf (11) einen topographisch ausgebildeten radial nicht planen Abstützbereich (31) aufweist, der aus einem härteren und/oder dickeren Material als die Deckbleche (17, 19) besteht oder eine die Federkonstante erhöhende Beschichtung aufweist und dadurch in axialer Richtung schwerer komprimierbar ist als die Sicken (20, 22; 25, 27) der Deckbleche (17, 19).

2. Dichtungssystem nach Anspruch 1,
**dadurch gekennzeichnet,**
**daß** der Abstützbereich (31) gegenüber der restlichen Distanzlage (29) in Richtung des Zylinderkopfs (11) einen axialen Überstand (u1) aufweist, der größer ist als die Dicke (d1) des Deckblechs (17) zwischen Zylinderkopf (11) und Distanzlage (29).

3. Dichtungssystem nach Anspruch 1,
**dadurch gekennzeichnet,**
**daß** der axiale Buchsenvorstand (b) größer ist als die Dicke (d2) des Deckblechs (19) zwischen Motorblock (3) und Distanzlage (29).

4. Dichtungssystem nach einem der Ansprüche 1 bis 3,
**dadurch gekennzeichnet,**
**daß** der Abstützbereich (31) mindestens eine die Zylinderöffnung (15) vollständig umschließende Sicke (33, 33', 33") und/oder Oberflächenstrukturierung, insbesondere Rillierung, aufweist.

5. Dichtungssystem nach Anspruch 4,
**dadurch gekennzeichnet,**
**daß** der Abstützbereich (31) eine Sicke (33') aufweist, und die Dicke (a, b) der Distanzlage (29) im Bereich der Sicke (33) größer ist als die Dicke (c) der Distanzlage im restlichen Bereich der Dichtung.

6. Dichtungssystem nach Anspruch 5,
**dadurch gekennzeichnet,**
**daß** die Dicke (a) der Distanzlage (29) im unmittelbar an die Zylinderöffnung (15) angrenzenden Abschnitt der Sicke (33') größer ist als die Dicke (b) der Distanzlage in den restlichen Sickenabschnitten.

7. Dichtungssystem nach Anspruch 4,
**dadurch gekennzeichnet,**
**daß** der Abstützbereich (31) eine Sicke (33'') aufweist, die in einem oberen, der Ebene der Distanzlage (29) entfernter liegenden Wölbungsbereich (Wo) eine größere Breite aufweist als in einem näher der Ebene der Distanzlage (2a) befindlichen, unteren Wölbungsbereich (Wu).

8. Dichtungssystem nach Anspruch 7,
**dadurch gekennzeichnet,**
**daß** die Sicke (33") in ihrem oberen Wölbungsbereich (Wo) seitlich vorstehende Wülste (33a) aufweist.

9. Dichtungssystem nach Anspruch 7 oder 8,
**dadurch gekennzeichnet,**
**daß** die Dicke der Distanzlage (29) im Sickenfußbereich (d1, d2) größer ist als diejenige im Bereich des Scheitelpunktes der Sicke (d3).

10. Dichtungssystem nach Anspruch 4,
**dadurch gekennzeichnet,**
**daß** der Abstützbereich (31) mehrere Sicken (33) und/oder Rillierungen, insbesondere eine Doppelsicke und/oder Doppelrillierung aufweist.

11. Dichtungssystem nach einem der Ansprüche 4 bis 10,
**dadurch gekennzeichnet,**
**daß** bei mindestens einer der Sicken (33) des Abstützbereiches (31) die Federkonstante in Umlaufrichtung variiert.

12. Dichtungssystem nach einem der Ansprüche 4 bis 11,
**dadurch gekennzeichnet,**
**daß** im Bereich der mindestens einen Sicke (33) und/oder Rillierung des Abstützbereichs (31) Stützelemente vorhanden sind.

13. Dichtungssystem nach Anspruch 12,
**dadurch gekennzeichnet,**
**daß** wenigstens eine der Sicken (33) und/oder Rillierungen im Abstützbereich (31) ganz oder teilweise mit einer Elastomerfüllung oder einem Hardcoating (36) als Stützelement versehen ist.

14. Dichtungssystem nach Anspruch 13,
**dadurch gekennzeichnet,**
**daß** das Stützelement als metallische Einlage, insbesondere als Metalldraht oder Metallspirale, ausgebildet ist.

15. Dichtungssystem nach einem der vorhergehenden Ansprüche,
**dadurch gekennzeichnet,**
**daß** der Abstützbereich (31) gegenüber der restlichen Distanzlage (29) in beiden axialen Richtungen einen axialen Überstand (u1, u2) aufweist.

16. Dichtungssystem nach Anspruch 4,
**dadurch gekennzeichnet,**
**daß** der Abstützbereich (31) wenigstens im Bereich der wenigstens einen Sicke (33) mit einer Beschichtung, insbesondere mit einer die Federkonstante der Sicke (33) erhöhenden Beschichtung oder einer Gleitbeschichtung, versehen ist.

17. Dichtungssystem nach einem der vorhergehenden Ansprüche,
**dadurch gekennzeichnet,**
**daß** die Distanzlage (29) aus einem anderen, insbesondere einem härteren und/oder dickeren, Material als die Deckbleche (17, 19) gefertigt ist.

18. Dichtungssystem nach einem der vorhergehenden Ansprüche,
**dadurch gekennzeichnet,**
**daß** der Abstützbereich (31) als einlegbarer Ring ausgebildet ist.

19. Dichtungssystem nach Anspruch 18,
**dadurch gekennzeichnet,**
**daß** der Ring aus einem anderen, insbesondere einem dickeren und/oder härteren, Material als die übrige Distanzlage (29) gefertigt ist.

20. Dichtungssystem nach einem der vorhergehenden Ansprüche,
**dadurch gekennzeichnet,**
**daß** der Abstützbereich (31) direkt auf der Laufbuchse (7) aufliegt.

21. Dichtungssystem nach Anspruch 4,
**dadurch gekennzeichnet,**
**daß** die Sicken (33) in beiden Deckblechen (17, 19) als Halbsicken (25, 27) ausgebildet sind.

22. Dichtungssystem nach Anspruch 21,
**dadurch gekennzeichnet,**
**daß** die Halbsicken (25, 27) der Deckbleche (17, 19), von der jeweiligen Zylinderöffnung (15) radial nach außen gesehen, in Richtung des Motorblocks (3) gewölbt sind.

23. Dichtungssystem nach Anspruch 4,
**dadurch gekennzeichnet,**
**daß** die Sicken (33) in beiden Deckblechen (17, 19) als Vollsicken (20, 22) ausgebildet sind.

24. Dichtungssystem nach Anspruch 23,
**dadurch gekennzeichnet,**
**daß** die Scheitel (21, 23) der Vollsicken (20, 22) in Richtung des Motorblocks (3) weisen.

25. Dichtungssystem nach einem der vorhergehenden Ansprüche,
**dadurch gekennzeichnet,**
**daß** die Zylinderkopfdichtung (13) aus zwei Deckblechen (17, 19) und der Distanzlage (29) besteht.

## Claims

1. Sealing system (1) having:
an engine block (3) of an internal combustion engine having a plurality of axial cylinder bores (5), which are each provided with a liner (7) having an axial liner projection (b), a cylinder head (11) and a metallic cylinder head seal (13) disposed between engine block (3) and cylinder head (11), said cylinder head seal having cylinder openings (15) corresponding to the cylinder bores (5) and including two corrugated cover plates (17, 19), which each have at least one corrugation (20, 22; 25, 27) completely surrounding the cylinder opening (15) radially externally of the liner (7), the cylinder head seal (13) additionally including a spacer layer (29) disposed between the two cover plates (17, 19), and the sums of the thicknesses of the seal layers in the region over the cylinder liner plus the axial height of the liner extension being greater than the sum of the thicknesses of the seal layers in the region of the seal abutting radially externally of the cylinder liner,
**characterised in that** the spacer layer (29), in the region between the circular end face (8) of the liner (7) and cylinder head (11) has a topographically configured, radially nonplanar support region (31), which is formed from a harder and/or thicker material than the cover plates (17, 19) or has a coating which increases the spring constant and is thereby more difficultly compressible in the axial direction than the corrugations (20, 22; 25, 27) of the cover plates (17, 19).

2. Sealing system according to claim 1, **characterised in that**, compared with the remaining spacer layer (29) when viewed with respect to the direction of the cylinder head (11), the support region (31) has an axial extension (u1) which is greater than the thickness (d1) of the cover plate (17) between cylinder head (11) and spacer layer (29).

3. Sealing system according to claim 1, **characterised in that** the axial liner projection (b) is greater than the thickness (d2) of the cover plate (19) between engine block (3) and spacer layer (29).

4. Sealing system according to one of claims 1 to 3, **characterised in that** the support region (31) has at least one corrugation (33, 33', 33") and/or surface structuring, more especially grooving, which completely surrounds the cylinder opening (15).

5. Sealing system according to claim 4, **characterised in that** the support region (31) has a corrugation (33'), and the thickness (a, b) of the spacer layer (29) in the region of the corrugation (33) is greater than the thickness (c) of the spacer layer in the remaining region of the seal.

6. Sealing system according to claim 5, **characterised in that** the thickness (a) of the spacer layer (29) in the portion of the corrugation (33') directly abutting the cylinder opening (15) is greater than the thickness (b) of the spacer layer in the remaining corrugation portions.

7. Sealing system according to claim 4, **characterised in that** the support region (31) has a corrugation (33") which, in an upper curved region (Wo) situated more remote from the plane of the spacer layer (29), has a greater width than in a lower curved region (Wu) situated closer to the plane of the spacer layer (29).

8. Sealing system according to claim 7, **characterised in that** the corrugation (33") has laterally protruding beads (33a) in its upper curved region (Wo).

9. Sealing system according to claim 7 or 8, **characterised in that** the thickness of the spacer layer (29) in the region of the base of the corrugation (d1, d2) is greater than that in the region of the peak point of the corrugation (d3).

10. Sealing system according to claim 4, **characterised in that** the support region (31) has a plurality of corrugations (33) and/or groovings, more especially a double corrugation and/or a double grooving.

11. Sealing system according to one of claims 4 to 10, **characterised in that**, in the case of at least one of the corrugations (33) of the support region (31), the spring constant varies in the circumferential direction.

12. Sealing system according to one of claims 4 to 11, **characterised in that** support elements are provided in the region of the at least one corrugation (33) and/or grooving of the support region (31).

13. Sealing system according to claim 12, **characterised in that** at least one of the corrugations (33) and/or groovings in the support region (31) is provided, wholly or partially, with an elastomeric filling or a hard coating (36) as the support element.

14. Sealing system according to claim 13, **characterised in that** the support element is in the form of a metallic insert, more especially a metal wire or metal coil.

15. Sealing system according to one of the preceding claims, **characterised in that** the support region (31) has an axial extension (u1, u2) compared with the remaining spacer layer (29) in the two radial directions.

16. Sealing system according to claim 4, **characterised in that** the support region (31), at least in the region of the at least one corrugation (33), is provided with a coating, more especially with a coating which increases the spring constant of the corrugation (33) or with a slide-promoting coating.

17. Sealing system according to one of the preceding claims, **characterised in that** the spacer layer (29) is manufactured from a different material, more especially from a harder and/or thicker material, than the cover plates (17, 19).

18. Sealing system according to one of the preceding claims, **characterised in that** the support region (31) is in the form of an insertable ring.

19. Sealing system according to claim 18, **characterised in that** the ring is manufactured from a different material, more especially from a thicker and/or harder material, than the remaining spacer layer (29).

20. Sealing system according to one of the preceding claims, **characterised in that** the support region (31) rests directly on the liner (7).

21. Sealing system according to claim 4, **characterised in that** the corrugations (33) in the two cover plates (17, 19) are in the form of half-corrugations (25, 27).

22. Sealing system according to claim 21, **characterised in that** the half-corrugations (25, 27) of the cover plates (17, 19) are curved in the direction of the engine block (3) when seen radially outwardly from the respective cylinder opening (15).

23. Sealing system according to claim 4, **characterised in that** the corrugations (33) in the two cover plates (17, 19) are in the form of full corrugations (20, 22).

24. Sealing system according to claim 23, **characterised in that** the peaks (21, 23) of the full corrugations (20, 22) point in the direction of the engine block (3).

25. Sealing system according to one of the preceding claims, **characterised in that** the cylinder head seal (13) comprises two cover plates (17, 19) and the spacer layer (29).

## Revendications

1. Système d'étanchéité (1) avec :
un bloc moteur (3) d'un moteur à combustion avec plusieurs perçages de cylindre axiaux (5), qui sont munis chacun d'une boîte de glissement (7) présentant un débord axial (b) de boîte, avec une tête (11) de cylindre et un joint (13) de tête de cylindre métallique placé entre le bloc moteur (3) et la tête (11) de cylindre et qui présente des ouvertures (15) de cylindre correspondant aux perçages (5) de cylindre et comprend deux tôles de couverture moulurées (17, 19) qui présentent chacune au moins une moulure (20, 22 ; 25, 27) entourant complètement l'ouverture (15) de cylindre à l'extérieur radialement de la boîte de glissement (7), le joint (13) de tête de cylindre comprenant de plus une couche d'écartement (29) placée entre les deux tôles de couverture (17, 19), les sommes des épaisseurs des couches d'étanchéité dans la zone au-dessus de la boîte de glissement de cylindre plus la hauteur axiale du débord de boîte étant supérieures à la somme des épaisseurs des couches d'étanchéité dans la partie du joint voisine à l'extérieur radialement de la boîte de glissement de cylindre,
***caractérisé en ce que*** la couche d'écartement (29) présente, dans la zone entre la surface frontale (8) annulaire circulaire de la boîte de glissement (7) et la tête (11) de cylindre, une zone d'appui (31) non plane radialement conformée de façon topographique, qui est composée d'un matériau plus dur et/ou plus épais que les tôles de couverture (17, 19) ou qui présente un revêtement augmentant la constante de ressort et est donc plus difficilement comprimable dans la direction axiale que les moulures (20, 22 ; 25, 27) des tôles de couverture (17, 19).

2. Système d'étanchéité selon la revendication 1, ***caractérisé en ce que*** la zone d'appui (31) présente, par rapport au reste de la couche d'écartement (29), en direction de la tête (11) de cylindre, un débord axial (u1) qui est plus grand que l'épaisseur (d1) de la tôle de couverture (17) entre la tête (11) de cylindre et la couche d'écartement (29).

3. Système d'étanchéité selon la revendication 1, ***caractérisé en ce que*** le débord axial (b) de boîte est plus grand que l'épaisseur (d2) de la tôle de couverture (19) entre le bloc moteur (3) et la couche d'écartement (29).

4. Système d'étanchéité selon l'une quelconque des revendications 1 à 3, ***caractérisé en ce que*** la zone d'appui (31) présente au moins une moulure (33, 33', 33") et/ou structuration de surface entourant complètement l'ouverture (15) de cylindre, en particulier un moletage.

5. Système d'étanchéité selon la revendication 4, ***caractérisé en ce que*** la zone d'appui (31) présente une moulure (33') et l'épaisseur (a, b) de la couche d'écartement (29) au niveau de la moulure (33) est plus grand que l'épaisseur (c) de la couche d'écartement dans le reste du joint.

6. Système d'étanchéité selon la revendication 5, ***caractérisé en ce que*** l'épaisseur (a) de la couche d'écartement (29) dans la section de moulure (33') directement voisine de l'ouverture de cylindre (15) est plus grande que l'épaisseur (b) de la couche d'écartement dans les autres sections de moulure.

7. Système d'étanchéité selon la revendication 4, ***caractérisé en ce que*** la zone d'appui (31) présente une moulure (33') qui, dans une zone de courbure supérieure (Wo) éloignée du plan de la couche d'écartement (29), présente une largeur plus grande que dans une zone de courbure inférieure (Wu) située plus près du plan de la couche d'écartement (29).

8. Système d'étanchéité selon la revendication 7, ***caractérisé en ce que*** la moulure (33") présente, dans sa zone de courbure supérieure (Wo), des bourrelets (33a) en saillie latérale.

9. Système d'étanchéité selon la revendication 7 ou 8, ***caractérisé en ce que*** l'épaisseur de la couche d'écartement (29) dans la zone de pied de la moulure (d1, d2) est plus grande qu'au niveau du sommet de la moulure (d3).

10. Système d'étanchéité selon la revendication 4, ***caractérisé en ce que*** la zone d'appui (31) présente plusieurs moulures (33) et/ou moletages, en particulier une moulure double et/ou un moletage double.

11. Système d'étanchéité selon l'une quelconque des revendications 4 à 10, ***caractérisé en ce que****,* sur au moins l'une des moulures (33) de la zone d'appui (31), la constante de ressort varie dans la direction circonférentielle.

12. Système d'étanchéité selon l'une quelconque des revendications 4 à 11, ***caractérisé en ce qu****'au* niveau de la moulure (33) et/ou du moletage au nombre d'au moins un(e) de la zone d'appui (31), il est prévu des éléments d'appui.

13. Système d'étanchéité selon la revendication 12, ***caractérisé en ce que****,* dans la zone d'appui (31), au moins l'un(e) des moulures (33) et/ou moletages est muni(e) entièrement ou partiellement d'une garniture en élastomère ou d'un revêtement dur (36) servant d'élément d'appui.

14. Système d'étanchéité selon la revendication 13, ***caractérisé en ce que*** l'élément d'appui est conformé en insert métallique, en particulier en fil métallique ou en spirale métallique.

15. Système d'étanchéité selon l'une quelconque des revendications précédentes, ***caractérisé en ce que*** la zone d'appui (31) présente, par rapport au reste de la couche d'écartement (29), un débord axial (u1, u2) dans les deux directions axiales.

16. Système d'étanchéité selon la revendication 4, ***caractérisé en ce qu****'au* moins au niveau de la moulure (33) au nombre d'au moins une, la zone d'appui (31) est munie d'un revêtement, en particulier d'un revêtement augmentant la constante de ressort de la moulure (33) ou d'un revêtement de glissement.

17. Système d'étanchéité selon l'une quelconque des revendications précédentes, ***caractérisé en ce que*** la couche d'écartement (29) est fabriquée dans un autre matériau, en particulier plus dur et/ou plus épais, que les tôles de couverture (17, 19).

18. Système d'étanchéité selon l'une quelconque des revendications précédentes, ***caractérisé en ce que*** la zone d'appui (31) est conformée en bague insérable.

19. Système d'étanchéité selon la revendication 18, ***caractérisé en ce que*** la bague est fabriquée dans un autre matériau, en particulier plus épais et/ou plus dur, que le reste de la couche d'écartement (29).

20. Système d'étanchéité selon l'une quelconque des revendications précédentes, ***caractérisé en ce que*** la zone d'appui (31) repose directement sur la boîte de glissement (7).

21. Système d'étanchéité selon la revendication 4, ***caractérisé en ce que*** les moulures (33) des deux tôles de couverture (17, 19) sont conformées en demi-moulures (25, 27).

22. Système d'étanchéité selon la revendication 21, ***caractérisé en ce que*** les demi-moulures (25, 27) des tôles de couverture (17, 19) sont courbées en direction du bloc moteur (3) depuis l'ouverture de cylindre (15) respective en regardant radialement vers l'extérieur.

23. Système d'étanchéité selon la revendication 4, ***caractérisé en ce que*** les moulures (33) des deux tôles de couverture (17, 19) sont conformées en moulures intégrales (20, 22).

24. Système d'étanchéité selon la revendication 23, ***caractérisé en ce que*** les sommets (21, 23) des moulures intégrales (20, 22) sont tournés en direction du bloc moteur (3).

25. Système d'étanchéité selon l'une quelconque des revendications précédentes, ***caractérisé en ce que*** le joint de tête de cylindre (13) est composé de deux tôles de couverture (17, 19) et de la couche d'écartement (29).
